# EUROPÄISCHE PATENTANMELDUNG

(11) **EP 4 345 844 A1**
(43) Veröffentlichungstag der Anmeldung: **03.04.2024**
(21) Anmeldenummer: 22198642.5
(22) Anmeldetag: 29.09.2022
(51) Int. Cl.: G21C 17/08, G21B 1/25, G02B 6/10

(54) **BILDLEITERVORRICHTUNG ZUR BILDÜBERTRAGUNG AUS EINEM REAKTIONSRAUM UND VERFAHREN ZUR HERSTELLUNG UND ZUR REGENERATION DER BILDLEITERVORRICHTUNG**

(71) Anmelder: Max-Planck-Gesellschaft zur Förderung der Wissenschaften e.V., 80539 München (DE)
(72) Erfinder: SOCHOR, Manfred, 85748 Garching (DE); ROHDE, Volker, 85748 Garching (DE); BIRKENMEIER, Gregor, 85748 Garching (DE); KAUNERT, Karlheinz, 85748 Garching (DE)
(74) Vertreter: v. Bezold & Partner Patentanwälte - PartG mbB

(57) **Zusammenfassung**

Eine Bildleitervorrichtung 1, die zur Bildübertragung 2 aus einem Reaktionsraum an eine Bildaufnahmeeinrichtung eingerichtet ist, umfasst ein Glasfaserbündel 5, das für die Bildübertragung 2 eingerichtet und mit zwei Anschlussstücken 6 verbunden ist, die jeweils an einem Ende des Glasfaserbündels 5 angeordnet sind, und einen Leitermantel 7, der das Glasfaserbündel 5 umhüllt und sich zwischen den Anschlussstücken 6 erstreckt, wobei eine Heizleitereinrichtung 8 mit mindestens einem Heizleiter 9, der zur Erwärmung des Glasfaserbündels 5 entlang seiner Länge auf eine vorbestimmte Behandlungstemperatur derart vorgesehen ist, dass durch die Erwärmung auf die Behandlungstemperatur strahlungsinduzierte Materialdefekte im Glasfaserbündel 5 reduzierbar sind. Es werden auch ein Verfahren zur Herstellung der Bildleitervorrichtung 1 und ein Verfahren zur Regeneration der Bildleitervorrichtung 1 beschrieben.

## Beschreibung

Die Erfindung betrifft eine Bildleitervorrichtung, die zur Bildübertragung aus einem Reaktionsraum eingerichtet ist, ein Verfahren zur Herstellung der Bildleitervorrichtung, sowie ein Verfahren zur Regeneration der Bildleitervorrichtung für eine Reduzierung strahlungsinduzierter Defekte. Anwendungen der Erfindung sind beispielsweise bei der Überwachung einer Brennkammer eines Fusionsreaktors, eines Kernspaltungsreaktor oder einer Neutronenquelle, in der Medizintechnik, insbesondere Radiologie, oder beim Betrieb von MRT- oder Röntgengeräten gegeben.

Es ist allgemein bekannt, dass Bildleiter zur Bildübertragung aus Umgebungen mit hoher Strahlungsbelastung verwendet werden, die eine Beschädigung oder sogar Zerstörung ungeschützter Elektronikkomponenten verursachen könnte. Der Bildleiter, der z. B. aus flexiblen Lichtleiterfasern hergestellt ist, leitet das Bild, das von einer ungeschützten Objektivlinse an einem Ende des Bildleiters in einem Raum mit schädlicher Strahlung aufgenommen wird, zu einer am anderen Ende des Bildleiters befindlichen Kamera. Die Kamera kann in einer strahlungsgeschützten Umgebung, z. B. einem Gehäuse, untergebracht sein. Ein Beispiel der Bildübertragung aus einem Tokamak-Reaktor wird von B. Chektybayev et al. in "Rev. Sci. Instrum." 86, 053505 (2015), beschrieben.

Da der Bildleiter der Strahlung weitgehend ungeschützt ausgesetzt ist, können durch Wechselwirkung mit hochenergetischen Photonen, Elektronen oder Neutronen Fehlstellen in der Struktur des Bildleitermaterials entstehen. Diese Fehlstellen verursachen z. B. eine Verfärbung und/oder Verdunklung des ursprünglich transparenten Materials der Lichtleiterfasern, sodass die Lichttransmission durch den Bildleiter erheblich reduziert wird. Von C. P. Chrobak et al. wird in "Rev. Sci. Instrum." 83, 10E514 (2012) beschrieben, dass durch eine Erwärmung der Lichtleiterfasern auf eine Temperatur von wenigen 100 °C die Bildung der durch Strahlung induzierten Defekte wenigstens teilweise rückgängig gemacht werden kann (Regeneration des Bildleiters). Für eine effektive Wiederherstellung der ursprünglichen Lichttransmission des defektfreien oder nahezu defektfreien Materials ist es wichtig, dass die Erwärmung der Lichtleiterfasern möglichst gleichmäßig über die gesamte Länge der Fasern erfolgt. Dabei wird zugleich vermieden, dass durch Temperaturgradienten Materialstress entsteht, wodurch die Lichtleiterfasern spröde werden und brechen könnten, was irreversibel ausfallende Bildpunkte in der Bildübertragung zur Folge hätte.

Aufgrund dieser Anforderungen wird die Erwärmung der Lichtleiterfasern bisher in einem Vakuumofen durchgeführt, der insbesondere für eine möglichst gleichmäßige Erhitzung der Lichtleiterfasern ausgelegt ist. Problematisch daran ist, dass hierfür der gesamte Bildleiter von seinem eigentlichen Einsatzort, typischerweise in einem Ultrahochvakuum, welches nur unter hohem Aufwand beflutet (z. B. belüftet) werden kann, abgebaut und in den Vakuumofen eingebaut werden muss. Da für die Demontage die Beflutung der Anlage, in der der Bildleiter installiert ist, notwendig ist, kann eine Regeneration des Bildleiter nur selten erfolgen. Je nach Einsatzort des Bildleiters kann der Umbau einen erheblichen Aufwand erfordern, oder er ist aufgrund vorhandener Reststrahlung, beispielsweise durch aufaktivierte metallische Werkstoffe, für menschliches Bedienpersonal sogar ausgeschlossen.

Die Aufgabe der Erfindung ist es, eine verbesserte Bildleitervorrichtung, ein verbessertes Verfahren zur Herstellung der Bildleitervorrichtung und ein verbessertes Verfahren zur Regeneration der Bildleitervorrichtung zu schaffen, mit denen Nachteile herkömmlicher Techniken vermieden werden. Insbesondere soll die Bildleitervorrichtung eine Regeneration mit verringertem Aufwand, verkürzten Regenerationsintervallen, größerer Geschwindigkeit und/oder geringeren Kosten erlauben.

Diese Aufgabe wird durch die Gegenstände der unabhängigen Ansprüche gelöst. Vorteilhafte Weiterbildungen sind in den abhängigen Ansprüchen und der Beschreibung angegeben.

Gemäß einem ersten allgemeinen Gesichtspunkt der Erfindung wird die obige Aufgabe durch eine Bildleitervorrichtung gelöst, die zur Bildübertragung aus einem Reaktionsraum an eine Bildaufnahmeeinrichtung eingerichtet ist. Die Bildleitervorrichtung umfasst ein Glasfaserbündel (Faseroptik), das für die Bildübertragung eingerichtet und mit zwei Anschlussstücken verbunden ist, die jeweils an einem Ende des Glasfaserbündels angeordnet sind, und einen Leitermantel, der das Glasfaserbündel umhüllt und sich zwischen den Anschlussstücken erstreckt. Für die Befestigung einerseits am oder im Reaktionsraum und andererseits an der Bildaufnahmeeinrichtung kann mindestens eines der Anschlussstücke mit einem Kopplungsbauteil, wie z. B. mindestens einem Flansch und/oder mindestens einem Isolationselement, ausgestattet sein. Ferner umfasst die Bildleitervorrichtung eine Heizleitereinrichtung mit mindestens einem Heizleiter (Mantel-Heizleiter), der zur Erwärmung des Glasfaserbündels entlang seiner Länge, vorzugsweise durchgehend entlang seiner gesamten Länge, auf eine vorbestimmte derartige Behandlungstemperatur vorgesehen ist, dass durch die Erwärmung auf die Behandlungstemperatur strahlungsinduzierte Materialdefekte im Glasfaserbündel reduzierbar sind.

Eine Bildübertragung aus einem Reaktionsraum an eine Bildaufnahmeeinrichtung bedeutet, dass ein Bild einer Szene im Reaktionsraum an eine Bildaufnahmeeinrichtung übertragen wird, die außerhalb des Reaktionsraums angeordnet ist und insbesondere nicht unmittelbar mit dem Reaktionsraum in Kontakt steht. Daher kann das Glasfaserbündel mittels der Anschlusstücke auf der einen Seite mit einer Objektiveinrichtung (Optik) im Reaktionsraum und auf der anderen Seite mit der Bildaufnahmeeinrichtung, wie z. B. einer Kamera oder einem Bildsensor, verbunden werden. Die einzelnen Fasern des Glasfaserbündels sind an ihren Enden streng geordnet mit den Anschlussstücken verbunden, sodass sich die relative Orientierung der Fasern, d. h. der Bildpunkte im übertragenen Bild, nicht verändert. Bildpunkte, die an der Objektiveinrichtung nebeneinander angeordnet sind, sind auch an der Bildaufnahmeeinrichtung nebeneinander angeordnet.

Bei dem Reaktionsraum handelt es sich vorzugsweise um eine z. B. umschlossene Kammer, in deren Innerem Bilder aufgenommen werden sollen. Dabei kann es sich beispielsweise um die Plasmabrennkammer eines Fusionsgenerators oder einen Teilchenbeschleuniger handeln. Diese Beispiele von Reaktionsräumen haben gemeinsam, dass sie während des Betriebs teilweise erhebliche Mengen ionisierender Strahlung in ihrer Umgebung erzeugen, die die Bildaufnahmeeinrichtung beschädigen oder sogar zerstören könnte. Die Bildaufnahmeeinrichtung braucht aufgrund der Bildübertragung aus dem Reaktionsraum nicht in dem oder in unmittelbarer Nähe zu dem Reaktionsraum angeordnet zu sein und kann z. B. von einem schützenden Gehäuse umgeben sein.

Das Glasfaserbündel ist von dem Leitermantel umhüllt, der zum Beispiel aus einem flexiblen Schlauch oder einem festen, vorzugsweise deformierbaren, Rohr bestehen kann. Die Fasern des Glasfaserbündels werden so vor äußeren Einflüssen, wie Verschmutzung oder mechanischen Belastungen, geschützt. Außerdem kann an dem Leitermantel eine Befestigungseinrichtung zur Fixierung der Bildleitervorrichtung am Einsatzort angebracht werden, ohne die Fasern des Glasfaserbündels zu belasten. Ionisierende Strahlung in der Umgebung des Reaktionsraums kann den Leitermantel bis zum Glasfaserbündel dagegen durchdringen, sodass Materialdefekte in der Gitterstruktur des Glasfaserbündels entstehen, die zu einer Verschlechterung der Lichttransmission führen. Diese Materialdefekte werden durch Erwärmung des Glasfaserbündels rückgängig gemacht.

Das Glasfaserbündel umfasst eine Vielzahl von Glasfasern, wobei je nach Ausführung auch mehrere beieinanderliegende Glasfasern zu Fasersträngen zusammengefasst sein können. Die Anfangspunkte der einzelnen Fasern bzw. Faserstränge an einem Ende des Glasfaserbündels sind den Endpunkten der jeweiligen Faser bzw. dem jeweiligen Faserstrang am anderen Ende des Glasfaserbündels zugeordnet. Auf diese Weise bleibt bei einer Bildübertragung die relative Orientierung der Bildpunkte erhalten. Ein Glasfaserbündel kann aus z. B. mindestens 10, mindestens 100, oder mindestens 1000 und bis zu einigen Millionen Einzelfasern bzw. Fasersträngen bestehen. Die typische Dicke der Fasern liegt in einem Bereich zwischen 30 µm und 100 µm.

Der mindestens eine Heizleiter erstreckt sich entlang der Länge des Glasfaserbündels und erlaubt vorteilhafterweise eine gleichmäßige Erhitzung des Glasfaserbündels. Die Heizleitervorrichtung erfüllt daher vorteilhafterweise die Funktion des im Stand der Technik für die Regeneration des Glasfaserbündels verwendeten, gleichmäßig heizenden Vakuumofens. Dadurch kann die Regeneration des Glasfaserbündels direkt am Verwendungsort der Bildleitervorrichtung vorgenommen werden. Auf einen schwierigen und zeitaufwändigen Umbau in den Vakuumofen kann verzichtet werden. Der Heizleiter umfasst vorzugsweise einen Widerstandsheizleiter, der mit einer Stromversorgung koppelbar ist. Vorzugsweise ist die Stromversorgung regelbar ausgeführt. Auf diese Weise kann die Zuverlässigkeit der Einstellung der Temperatur der Heizleitervorrichtung verbessert werden.

Der mindestens eine Heizleiter umfasst vorzugsweise einen stromleitenden Kern, der von einem elektrisch isolierenden Material ummantelt ist. Der stromleitende Kern produziert Wärme durch seinen intrinsischen elektrischen Widerstand, während der isolierende Mantel dafür sorgt, dass ein Stromfluss von dem Heizleiter auf elektrisch leitende Materialien in der Umgebung unterbunden wird.

Ein weiterer besonderer Vorteil der Bildleitervorrichtung besteht darin, dass die Regeneration des Glasfaserbündels ohne substantielle Beeinträchtigungen der Anwendung der Bildleitervorrichtung häufiger, über kürzere Zeitintervalle vorgenommen werden kann, als dies bei der herkömmlichen Technik der Fall ist. Wird das herkömmliche Verfahren zur Regeneration verwendet, bei dem der Bildleiter von seinem Einsatzort ausgebaut und in einen Ofen eingebaut werden muss, ist es in der Praxis kaum anders möglich, als den Bildleiter so lange an seinem Einsatzort zu belassen, wie eine sinnvolle Verwendung möglich ist. Der Umbau in den Ofen findet erst dann statt, wenn die Transmission des Bildleiters bereits so stark reduziert wurde, dass eine Weiterverwendung nicht mehr akzeptabel ist, oder aber wenn eine allgemeine längere Wartungsphase des Reaktionsraums ansteht. Es konnte allerdings von C. P. Chrobak et al. in "Rev. Sci. Instrum." 83, 10E514 (2012), gezeigt werden, dass es vorteilhaft ist, Glasfaserbündel häufiger und dafür über kürzere Zeiträume zu heizen, da auf diese Weise das Entstehen von irreversiblen Strahlungsschäden im Glasfaserbündel vermieden werden kann. Dieser Vorteil kann mit der erfindungsgemäßen Bildleitervorrichtung besser ausgenutzt werden.

Gemäß einem zweiten allgemeinen Gesichtspunkt der Erfindung wird die oben genannte Aufgabe durch ein Verfahren zur Herstellung der Bildleitervorrichtung gemäß dem ersten allgemeinen Gesichtspunkt oder einer ihrer Ausführungsformen gelöst. Bei dem erfindungsgemäßen Verfahren werden zunächst das Glasfaserbündel und der Leitermantel zur Aufnahme des Glasfaserbündels bereitgestellt. Anschließend werden das Glasfaserbündel im Inneren des Leitermantels positioniert und die zwei Anschlussstücke zur Verbindung mit dem Glasfaserbündel bereitgestellt. Danach wird der mindestens eine Heizleiter entlang der Länge des Leitermantels positioniert. Schließlich werden die Anschlussstücke jeweils mit einem der beiden Enden des Glasfaserbündels und dem zugehörigen Ende des Leitermantels verbunden.

Ein wichtiger Vorteil des erfindungsgemäßen Verfahrens besteht darin, dass es erlaubt, den Heizleiter derart entlang des Glasfaserbündels auszurichten, dass eine besonders gleichmäßige Wärmeverteilung entlang des Glasfaserbündels durch den Heizleiter erzeugt werden kann. Dadurch, dass das Glasfaserbündel im Inneren des Leitermantels positioniert wird, bevor die Positionierung des Heizleiters erfolgt, kann sichergestellt werden, dass der Heizleiter die Fasern des Glasfaserbündels nicht beschädigt.

Gemäß einem dritten allgemeinen Gesichtspunkt der Erfindung wird die oben genannte Aufgabe durch ein Verfahren zur Regeneration der Bildleitervorrichtung gemäß dem ersten allgemeinen Gesichtspunkt oder einer ihrer Ausführungsformen gelöst, bei dem das Glasfaserbündel mit der Heizleitereinrichtung auf die Behandlungstemperatur derart erwärmt wird, dass durch die Erwärmung auf die Behandlungstemperatur strahlungsinduzierte Materialdefekte im Glasfaserbündel reduziert werden. Vorzugsweise erfolgt die Erwärmung auf die Behandlungstemperatur im Bereich von 100 °C und 300 °C, insbesondere von 200 °C und 250 °C. Alternativ kann eine höhere Behandlungstemperatur eingestellt werden, wobei die maximale Behandlungstemperatur in Abhängigkeit von der Wärmeverträglichkeit der verwendeten Bauteile, insbesondere des Klebstoffs, mit dem die Fasern zusammen gehalten werden, gewählt wird. Insbesondere wird die Behandlungstemperatur so gewählt, dass bei der Behandlungstemperatur ein Ausgasen aus Bauteilen der Bildleitervorrichtung, insbesondere des Klebstoffs, ausgeschlossen oder auf ein vernachlässigbares Maß reduziert ist.

Vorteilhafterweise erlaubt das erfindungsgemäße Regenerationsverfahren, strahlungsinduzierte Defekte in der Gitterstruktur des Glasfaserbündels zu reduzieren oder sogar vollständig rückgängig zu machen. Der in der Praxis gewählte Temperaturbereich zur Regeneration des Glasfaserbündels hängt insbesondere von der Materialzusammensetzung der Glasfasern ab. Außerdem kann der Temperaturbereich in Abhängigkeit von der Art der ionisierenden Strahlung gewählt werden, durch die die Defekte in der Gitterstruktur erzeugt worden sind. Beispielsweise kann ein Schott IG-163 Glasfaserbündel, das hochenergetischen Neutronen und Gammastrahlung aus Kernzerfällen ausgesetzt war, bei einer Temperatur von 200 °C regeneriert werden. Welche Temperatur bevorzugt verwendet wird, kann z. B. durch einfache Tests oder Referenzwerte aus der Fachliteratur ermittelt werden.

Gemäß einer bevorzugten Ausführungsform der Erfindung verläuft der mindestens eine Heizleiter entlang der Außenseite des Leitermantels und befindet sich in thermischem Kontakt mit dem Leitermantel. Auf diese Weise kommt der Heizleiter selber nicht mit dem Glasfaserbündel in Kontakt. Eine mechanische Beschädigung der einzelnen Fasern durch den Heizleiter kann vorteilhaft ausgeschlossen werden. Stattdessen überträgt der Heizleiter Wärme auf den Leitermantel, in dessen Inneren sich das Glasfaserbündel befindet. Der Heizleiter erstreckt sich dabei vorzugsweise durchgehend über die gesamte Länge des Leitermantels. Dadurch die Gleichmäßigkeit der Wärmeverteilung im Inneren des Leitermantels verbessert werden. Das Glasfaserbündel befindet sich über die gesamte Länge in einer Umgebung mit gleichmäßiger Temperatur, sodass kein Temperaturgradient entlang der Länge des Glasfaserbündels entsteht. Außerdem wird vermieden, dass einzelne Fasern durch einen direkten Kontakt mit dem Heizleiter überhitzt und dadurch beschädigt werden könnten.

Gemäß einer alternativen bevorzugten Ausführungsform der Erfindung ist der mindestens eine Heizleiter zusammen mit dem Glasfaserbündel im Inneren des Leitermantels angeordnet und erstreckt sich über die Länge des Leitermantels, besonders bevorzugt über die gesamte Länge des Leitermantels. Vorteilhaft an dieser Ausführungsform ist, dass die Wärme des Heizleiters direkt und ohne Verzögerung durch die zusätzliche Masse des Leitermantels auf das Glasfaserbündel übertragen werden kann. Daher eignet sich diese Ausführungsform besonders für Anwendungen, in denen die Temperatur und insbesondere der zeitliche Temperaturverlauf des Glasfaserbündels besonders genau kontrolliert werden soll. Dies kann zum Beispiel in der Entwicklung und Erprobung von Materialien für Glasfasern von Vorteil sein. Außerdem kann der Einfluss des Leitermantels auf die Wärmeverteilung im Inneren des Leitermantels reduziert werden. Das Material und die geometrische Form des Leitermantels hat nur einen geringen Einfluss auf die Wärmeverteilung im Inneren, sodass die Form des Leitermantels besser an die äußeren Begebenheiten angepasst werden kann.

Bei dieser Ausführungsform wird insbesondere beim Zusammenbau der Heizleitereinrichtung vorzugsweise darauf geachtet, dass die Fasern des Glasfaserbündels nicht beschädigt werden und dass der Heizleiter nicht übermäßig gegen die Fasern gedrückt wird, wenn der Leitermantel mit dem Glasfaserbündel und dem Leitermantel bewegt oder gebogen wird.

In einer weiteren bevorzugten Ausführungsform umfasst die Heizleitereinrichtung zwei Heizleiter, die sich entlang der Länge des Leitermantels erstrecken und an einander gegenüberliegenden Seiten des Glasfaserbündels angeordnet sind. Bereits ein Heizleiter, der sich vorzugsweise entlang der gesamten Länge des Leitermantels erstreckt, stellt eine gleichmäßige Temperatur des Glasfaserbündels in longitudinaler Richtung und auch in Umfangsrichtung des Glasfaserbündels sicher. Durch die Bereitstellung von zwei Heizleitern kann bei dieser Ausführungsform dazu beigetragen werden, die Gleichmäßigkeit der Wärmeverteilung in Umfangsrichtung des Glasfaserbündels weiter zu verbessern und/oder die Ausfallsicherheit, z. B. aufgrund eines mechanischen Defekts, zu erhöhen.

Vorzugsweise weist die Heizleitereinrichtung an mindestens einem der Anschlusstücke einen weiteren Heizleiter (Anschluss-Heizleiter) auf, der zumindest teilweise das Anschlussstück umgibt und im thermischen Kontakt mit dem Anschlussstück steht. Auf diese Weise wird zusätzlich zu dem Leitermantel auch das Anschlussstück auf eine gleichmäßige Temperatur, vorzugsweise auf die gleiche Temperatur wie der Leitermantel, gebracht. Die einzelnen Heizleiter der Heizleitereinrichtung können getrennt voneinander regelbar sein und/oder mit jeweils einer separat zugeordneten Stromversorgung koppelbar sein. Zusätzlich oder alternativ können mehrere Heizleiter zu Gruppen zusammengefasst werden, die gemeinsam geregelt werden können und/oder die über eine gemeinsame Stromversorgung betrieben werden können. Temperaturgradienten des Glasfaserbündels im Bereich des Anschlussstücks können so vermieden werden, wodurch eine möglichst effiziente Rückgewinnung der Transmissionseigenschaften des Glasfaserbündels erreicht werden kann. Außerdem können temperaturinduzierter Materialstress im Glasfasermaterial und insbesondere im Bereich der Anschlussstücke eine Versprödung des Glasfasermaterials, ggf. mit Brüchen einzelner Fasern vermieden werden.

Ein Verfahren zur Herstellung einer Bildleitervorrichtung umfasst gemäß einer vorteilhaften Ausführungsform ferner den Schritt, mindestens einen weiteren Heizleiter derart zu positionieren, dass er zumindest teilweise mindestens eines der Anschlusstücke umgibt und im thermischen Kontakt mit dem Anschlussstück steht. Dazu kann der Heizleiter bereits vor der Positionierung an das Anschlussstück angepasst geformt werden, z. B. indem der Heizleiter um einen Dorn gebogen wird, der an die Form des Anschlussstücks angepasst ist. Dabei wird vorzugsweise ein Material des Heizleiters mit einer Elastizität verwendet. Um den Heizleiter in eine Form zu biegen, die der Kontur des Anschlussstücks entspricht, wird der zu Hilfe genommene Dorn meist eine etwas andere Form aufweisen als das Anschlussstück, sodass beim Abnehmen des Heizleiters von dem Dorn, der etwas elastische Heizleiter in die korrekte Form federt.

Der Leitermantel weist besonders bevorzugt eine thermische Leitfähigkeit eines metallischen Werkstoffs auf. Die thermische Leitfähigkeit von Metallen ist typischerweise größer als 15 W/(m·K), für bestimmte Materialien beträgt sie auch einige 100 W/(m·K). Die thermische Leifähigkeit der meisten Nicht-Metalle liegt deutlich darunter. Durch die große thermische Leitfähigkeit des Materials des Leitermantels kann die Wärme des Heizleiters vorteilhafterweise mit geringer Verzögerung an das Glasfaserbündel weitergeleitet werden. Außerdem wird der Leitermantel selber schnell auf eine gleichmäßige Temperatur gebracht, sodass Temperaturgradienten im Inneren des Leitermantels vermieden werden können.

Gemäß einer weiteren Ausführungsform umfasst die Bildleitervorrichtung ferner mindestens einen Hüllschlauch, der den Leitermantel und den mindestens einen Heizleiter seitlich gleichmäßig bedeckt, insbesondere vollständig umhüllt, und für eine Verteilung von Wärme von dem mindestens einen Heizleiter auf den Leitermantel eingerichtet ist. Vorzugsweise weist der mindestens eine Hüllschlauch eine thermische Leitfähigkeit eines metallischen Werkstoffs auf und/oder ist elastisch. Der mindestens eine Hüllschlauch umschließt den Leitermantel und trägt zu einer weiteren Verbesserung einer gleichmäßigen Wärmeverteilung bei. Der mindestens eine Hüllschlauch kann dabei teilweise oder vollständig über die Anschlussstücke gezogen werden, sodass insbesondere an den Übergangsstellen zu den Anschlussstücken ein eventuell ungleichmäßiger Temperaturgradient verhindert werden kann.

Es kann ein einziger Hüllschlauch vorgesehen sein, wodurch der Aufbau dieser Ausführungsform der Bildleitervorrichtung relativ einfach ist. Alternativ können mehrere Hüllschläuche, z. B. flexible Schläuche aus Drahtgeflecht, insbesondere Kuper, vorgesehen sein, die in radialer Richtung übereinander angeordnet sind. Mehrere Hüllschläuche können unmittelbar aneinander angrenzend übereinander angeordnet sein, oder sie können durch Zwischenlagen voneinander getrennt sein. Der einzige Hüllschlauch oder ein Hüllschlauch von den mehreren Hüllschläuche kann zwischen dem mindestens einen Heizleiter und dem Leitermantel angeordnet sein, wodurch vorteilhafterweise die Wärmeleitfläche zum Leitermantel vergrößert wird.

Wenn der Heizleiter entlang der Länge des Glasfaserbündels an der Außenseite des Leitermantels angeordnet ist, kann der Hüllschlauch den Heizleiter gegen den Leitermantel drücken und so den konstanten thermischen Kontakt zwischen Heizleiter und Leitermantel verbessern. Dazu ist es besonders vorteilhaft, wenn der Hüllschlauch aus einem elastischen Material gefertigt ist. Ist der Hüllschlauch zudem aus einem Material mit der thermischen Leitfähigkeit eines Metalls gefertigt, kann der Hüllschlauch dazu beitragen, die Wärme des Heizleiters möglichst gleichmäßig auf den Leitermantel zu übertragen. Der Hüllschlauch umfasst besonders bevorzugt ein Metallgeflecht, beispielsweise einen Schlauch aus einem Kupfergeflecht.

Verfahrensbezogen sind in einer weiteren Ausführungsvariante der Erfindung entsprechend die Schritte vorgesehen, einen Hüllschlauch, der eine thermische Leitfähigkeit eines metallischen Werkstoffs aufweist und elastisch ist, bereitzustellen und den Leitermantel, das Glasfaserbündel und den mindestens einen Heizleiter, der zur Erwärmung des Glasfaserbündels vorgesehen ist, mit dem Hüllschlauch zu überziehen, sodass der Hüllschlauch für eine Verteilung von Wärme von dem mindestens einen Heizleiter auf den Leitermantel und den mindestens einen Heizleiter seitlich gleichmäßig bedeckt, insbesondere vollständig umhüllt.

In einer besonders bevorzugten Variante, in der das Verfahren das Überziehen des Leitermantels, des Glasfaserbündels und des mindestens einen Heizleiters mit dem Hüllschlauch umfasst, kann das Verfahren ferner den Schritt umfassen, den Hüllschlauch auf einem Hilfsrohr mit einem Innendurchmesser aufzuspannen, der größer ist als der Außendurchmesser des Verbundes aus dem Leitermantel, dem Glasfaserbündel und dem mindestens einen Heizleiter. Anschließend kann der Leitermantel mit dem Glasfaserbündel und dem mindestens einen Heizleiter in dem Hilfsrohr positioniert werden. Schließlich folgt das Rückziehen des Hilfsrohrs von dem Leitermantel mit dem Glasfaserbündel und dem mindestens einen Heizleiter, während der Hüllschlauch auf dem Leitermantel, dem Glasfaserbündel und dem mindestens einen Heizleiter verbleibt.

Vorteilhafterweise vereinfachen diese zusätzlichen Verfahrensschritte, dass der Hüllschlauch korrekt auf dem Heizleiter und dem Leitermantel positioniert wird und keines der Bestandteile der Bildleitervorrichtung durch die Anbringung des Hüllschlauchs unerwünscht verschoben wird. Zudem ist es einfacher, ein glattes Hilfsrohr mit dem Hüllschlauch zu überziehen, als den unebenen Leitermantel mit den Anschlussstücken und dem Heizleiter. Insbesondere an den Kanten der Anschlussstücke könnte der Hüllschlauch hängen bleiben und eventuell sogar beschädigt werden, sodass sich der Wärmeausgleich durch den Hüllschlauch reduzieren könnte.

Da der Hüllschlauch vorzugsweise elastisch ist, kann er über ein Hilfsrohr gezogen werden, dessen Außendurchmesser größer ist, als der Außendurchmesser des Leitermantels mit dem Heizleiter und den Anschlussstücken. Bei dem Hüllschlauch könnte es sich beispielsweise um einen Schlauch aus einem Kupfergeflecht handeln, dessen Durchmesser durch eine Stauchung des Schlauches erhöht werden kann. Bei der Stauchung wird der Hüllschlauch longitudinal zusammengeschoben. Dabei wird die Orientierung der Kupferfasern etwas gedreht, sodass sich die Länge des Hüllschlauchs verkürzt, aber der Durchmesser vergrößert wird.

Anschließend können die restlichen Komponenten der Bildleitervorrichtung ohne Behinderung in das Rohr geschoben und so positioniert werden, dass sich ein Ende des Hüllschlauchs ungefähr dort befindet, wo es auch im endgültigen Zustand verbleiben soll. Dieses Ende wird festgehalten und das Hilfsrohr abgezogen. Dabei verbleibt dieses Ende des Hüllschlauchs an der vorgegebenen Position des Leitermantels oder des Anschlussstücks. Der restliche Hüllschlauch legt sich gleichmäßig über den Leitermantel mit der Heizleitereinrichtung und dem Glasfaserbündel, ohne an etwaigen Kanten hängenzubleiben und dabei beschädigt werden zu können.

Gemäß einer weiteren bevorzugten Ausführungsform umfasst die Bildleitervorrichtung ferner mindestens einen Temperatursensor, der zur Erfassung der Temperatur der Bildleitervorrichtung eingerichtet ist. Insbesondere kann der Temperatursensor dazu eingerichtet sein, die Temperatur des Leitermantels zu erfassen. Die erfasste Temperatur kann dazu verwendet werden, die Heizleitereinrichtung mittels einer Regelung auf die gewünschte Temperatur einzustellen. Dies kann manuell von einem menschlichen Nutzer oder automatisch durch eine Steuerung erfolgen.

Beispielsweise kann die Stromversorgung der Heizleiter ein Steuergerät umfassen, das dazu eingerichtet ist, Temperaturdaten von dem Temperatursensor zu empfangen und die Temperatur des Heizleiters mittels einer Proportional-Integral-Differential-Schleife (PID-Loop) zu regeln. Alternativ kann die Steuerung oder Regelung auch von einem Softwaremodul vorgenommen werden.

Bevorzugt ist die Heizleitereinrichtung zur Erwärmung des Glasfaserbündels auf die Behandlungstemperatur im Bereich von 100 °C und 300 °C, insbesondere von 200 °C und 250 °C, eingerichtet, die den Regenerationstemperaturen von typischen Glasfaserbündeln entsprechen.

Das Verfahren zur Herstellung der Bildleitervorrichtung kann entsprechend gemäß einer Ausführungsvariante ferner den Schritt umfassen, mindestens einen Temperatursensor anzubringen, der zur Erfassung der Temperatur der Bildleitervorrichtung eingerichtet ist. In Varianten, in denen die Bildleitervorrichtung einen Hüllschlauch umfasst, kann ein Temperatursensor bevorzugt zwischen dem Leitermantel und dem Hüllschlauch positioniert werden.

In einer weiteren Ausführungsform umfasst die Bildeitervorrichtung ferner eine Zusatz-Heizeinrichtung mit einem temperierbaren Arbeitsgas, das zur Beheizung mindestens einer Umgebungskomponente der Bildleitervorrichtung ausgebildet ist. Diese Ausführungsform ist vorzugsweise vorgesehen, wenn die Bildleitervorrichtung in einem Umgebungsdruck, d. h. nicht im Vakuum, betrieben wird. Beispielsweise kann die Zusatz-Heizeinrichtung dazu verwendet werden, das Arbeitsgas, beispielsweise Stickstoff, auf eine Temperatur zu bringen, die in der Nähe der Temperatur des Leitermantels liegt. Dieses Gas kann für die Beheizung von Komponenten und Bauteilen in der Umgebung der Bildleitervorrichtung verwendet werden, insbesondere, wenn diese Komponenten in Interaktion mit der Bildleitervorrichtung stehen.

Beispielsweise kann das Arbeitsgas dazu verwendet werden, die Optik zu heizen, an die die Bildleitervorrichtung auf der Seite des Reaktionsraums angeschlossen ist. In vielen Fällen ist das Glasfaserbündel mittels Klebeverbindung mit den Anschlussstücken gefügt. Bei der Erwärmung der Bildleitervorrichtung können diese Klebeverbindungen unter Umständen ausgasen. Diese Gase könnten auf der Optik kondensieren und so eine Verschmutzung oder Trübung der Optik zur Folge haben. Eine Beheizung der Optik auf eine Temperatur in der Nähe der Bildleitertemperatur kann diese Kondensation verhindern oder zumindest reduzieren. Alternativ oder zusätzlich können mit dem strömenden Arbeitsgas unerwünschte Klebstoffdämpfe von lichttransmittierenden Oberflächen im Strahlengang, insbesondere vom Eingangs-/Ausgangsfenster des Glasfaserbündels und/oder der Optik, ferngehalten werden. Das erhitzte Arbeitsgas kann die Gase der Klebeverbindung aufnehmen und von einer Pumpeinrichtung abgesaugt werden.

Das Verfahren zur Regeneration der Bildleitervorrichtung kann entsprechend gemäß einer Ausführungsform der Erfindung des Weiteren die Schritte umfassen, das Arbeitsgas mit der Zusatz-Heizeinrichtung auf eine Temperatur im Bereich von 100°C und 400°C, insbesondere von 200°C und 300°C zu erwärmen und mindestens eine Umgebungskomponente der Bildleitervorrichtung mit dem erwärmten Arbeitsgas zu temperieren, insbesondere anzuströmen.

In einer weiteren Ausführungsform kann die Bildleitervorrichtung mit mindestens einer transparenten Platte, vorzugsweise aus Glas, insbesondere Quarzglas, ausgestattet sein, die auf Seiten des Reaktionsraums an das Eingangs-/Ausgangsfenster des Glasfaserbündels und/oder die Optik angrenzend so angeordnet ist, dass das Eingangs-/Ausgangsfenster und/oder die Optik beim Ausheizvorgang vor Beschlag geschützt wird. Alternativ oder zusätzlich kann mindestens eine transparente Platte, vorzugsweise aus Glas, insbesondere Quarzglas, auf Seiten der Bildaufnahmeeinrichtung an das Eingangs-/Ausgangsfenster des Glasfaserbündels angrenzend so angeordnet ist, dass die Bildaufnahmeeinrichtung beim Ausheizvorgang vor Beschlag geschützt wird. Ein weiterer Vorteil der transparenten Platte(n) ist, dass durch eine Beobachtung der Plattenoberfläche, z. B. mittels einer optischen Messung, direkt der Grad der Verschmutzung während des Ausheizvorgangs erfasst werden kann.

Die mindestens eine transparente Platte kann im Strahlengang fest angeordnet sein. Alternativ kann die mindestens eine transparente Platte vorzugsweise beweglich angeordnet und mit mindestens einem Antrieb zwischen einer Position außerhalb des Strahlengangs der Bildübertragung und einer Position im Strahlengang verstellbar sein (z. B. Transparentglas-Shutter). Selbst bei einem Ausfall des Antriebs besteht vorteilhafterweise die Möglichkeit, durch die Platte noch Bilder zu übertragen.

Gemäß weiteren Varianten der Erfindung kann die mindestens eine transparente Platte mit einer Plattenheizeinrichtung, z. B. einem Widerstandsheizer, ausgestattet und beheizbar sein und/oder eine wärmeleitende Kopplung mit dem jeweiligen beheizten Ende der Bildleitervorrichtung, insbesondere des Glasfaserbündels, aufweisen. Die wärmeleitende Kopplung kann z. B. eine metallische Brücke zwischen einem optional vorgesehenen metallischen Rahmen der mindestens einen transparenten Platte und dem jeweiligen beheizten Ende der Bildleitervorrichtung umfassen. Vorteilhafterweise kann damit die mindestens eine transparente Platte ausgeheizt und z. B. während einer Regeneration der Bildleitervorrichtung von störenden Niederschlägen gereinigt werden.

Das Verfahren kann gemäß einer weiteren bevorzugten Ausführungsform des Weiteren den Schritt der Befestigung von mindestens einer Halteklammer an der Bildleitervorrichtung umfassen, wobei die mindestens eine Halteklammer an ihren Kontaktstellen mit der Bildleitervorrichtung aus einem elektrisch und thermisch isolierenden Material gefertigt ist. In einem weiteren Schritt folgt die Befestigung der mindestens einen Halteklammer an mindestens einer Umgebungskomponente der Heizleitervorrichtung.

Auf diese Weise kann erreicht werden, dass die Bildleitervorrichtung nicht mit Umgebungskomponenten in Kontakt kommt, die nicht für hohe Temperaturen ausgelegt sind. Durch die Verwendung von thermisch isolierendem Material wird verhindert, dass Wärme von der Heizleitereinrichtung über die Halteklammern an die Umgebung abfließt. Zum einen wird die Umgebung vor den hohen Temperaturen der Bildleitervorrichtung geschützt. Zum anderen kann so verhindert werden, dass durch Abfluss von Wärme an einzelnen Stellen der Bildleitervorrichtung ein Temperaturgradient innerhalb des Leitermantels entsteht. Des Weiteren kann vorteilhafterweise eine ungewollte oder übermäßige Biegung des Leitermantels mit dem Glasfaserbündel und der Heizleitereinrichtung vermieden werden, indem die Halteklammern die Bildleitervorrichtung abstützen, sodass z. B. ein übermäßiges Durchhängen der Bildleitervorrichtung verhindert werden kann.

Durch die Verwendung von elektrisch isolierendem Material kann verhindert werden, dass sich Schäden an elektrischen Komponenten auf weitere Komponenten übertragen. Das betrifft sowohl, dass unkontrollierte elektrische Ströme aus der Umgebung der Bildleitervorrichtung auf die Bildleitervorrichtung fließen, als auch, dass bei einem eventuellen Kurzschluss bei einem Isolationsfehler der Heizleitereinrichtung ein unkontrollierter Strom auf weitere Komponenten in der Umgebung der Bildleitervorrichtung fließt.

Weitere Einzelheiten und Vorteile der Erfindung werden im Folgenden unter Bezug auf die beigefügten Zeichnungen beschrieben. Die Zeichnungen zeigen in:
- Figur 1:: eine Perspektivansicht einer bevorzugten Ausführungsform der erfindungsgemäßen Bildleitervorrichtung;
- Figur 2:: eine weitere, teilweise geschnittene Perspektivansicht der Bildleitervorrichtung gemäß einer vorteilhaften Ausführungsform der Erfindung;
- Figur 3:: eine Perspektivansicht eines zusätzlichen Heizleiters zur Anbringung an einem der Anschlussstücke gemäß vorteilhaften Ausführungsformen der Erfindung; und
- Figur 4:: Schnittansichten der Bildleitervorrichtung am Einsatzort gemäß einer vorteilhaften Ausführungsform der Erfindung.

Merkmale bevorzugter Ausführungsformen der erfindungsgemäßen Bildleitervorrichtung werden im Folgenden unter beispielhaftem Bezug auf Ausführungsformen beschrieben, die mit insgesamt vier Heizleitern ausgestattet sind und bei denen die Bildleitervorrichtung mindestens teilweise mit einem Hüllschlauch aus einem Kupfergeflecht überzogen ist. Außerdem ist der beispielhafte Bildleiter für die Verwendung in einer Vakuumumgebung ausgelegt und umfasst daher vakuumkompatible Flanschverbindungen an beiden Anschlussstücken. Es wird betont, dass die Anwendung der Erfindung nicht auf dieses Beispiel beschränkt, sondern entsprechend auch in anderen Umgebungen, insbesondere bei Atmosphärendruck, und in anderen Konfigurationen von Vorteil sein kann. Beispielsweise ist es nicht notwendig, dass die Bildleitervorrichtung vakuumkompatibel ausgeführt ist. Des Weiteren ist die Umsetzung der Erfindung in der Praxis nicht auf die beispielhaft angegebenen Formen und Dimensionen der einzelnen Komponenten beschränkt. Vielmehr kann die Bildleitervorrichtung in Abhängigkeit von der konkreten Anwendung der Bildleitervorrichtung modifiziert werden. Eine Optik zur Bildaufnahme auf Seiten des Reaktionsraumes kann als Teil der erfindungsgemäßen Bildleitervorrichtung oder alternativ gesondert als Teil der Reaktionsraumes betrachtet werden. Des Weiteren kann ein Fensterflansch auf Seiten der Bildaufnahmeeinrichtung als Teil der erfindungsgemäßen Bildleitervorrichtung oder alternativ gesondert als Teil der Bildaufnahmeeinrichtung betrachtet werden.

Gemäß weiteren Varianten kann die Bildleitervorrichtung mit anderen Verbindungselementen an den Anschlussstücken verbunden sein, und/oder es kann auf die illustrierten Flanschverbindungen verzichtet werden, z. B. wenn die Anschlussstücke direkt mit ihrem jeweiligen Einsatzort verbunden werden können. Des Weiteren kann die Bildleitervorrichtung einen Hüllschlauch aus einem anderen Material umfassen, oder es können mehrere Hüllschläuche vorgesehen sein, oder es kann ganz auf einen Hüllschlauch verzichtet werden. Des Weiteren könnte die Heizleitereinrichtung mehr oder weniger als vier Heizleiter umfassen. Eine Bildleitervorrichtung kann beispielsweise ausschließlich einen einzigen oder mehr als zwei Mantel-Heizleiter aufweisen. Die Heizleiter könnten ebenso direkt mit einer Stromversorgung verbunden sein, und/oder mit einer Temperaturregelung betrieben werden. Zu diesem Zweck könnten z.B. Temperatursensoren und Heizleiter in einer Einheit verbaut sein.

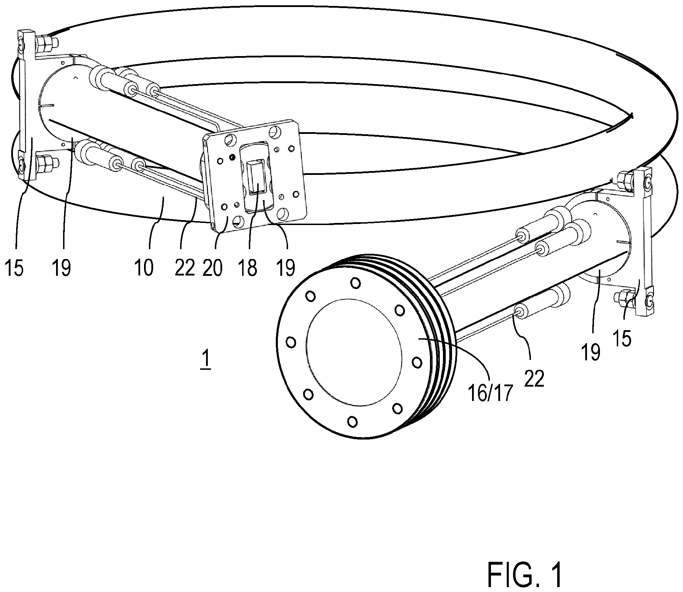

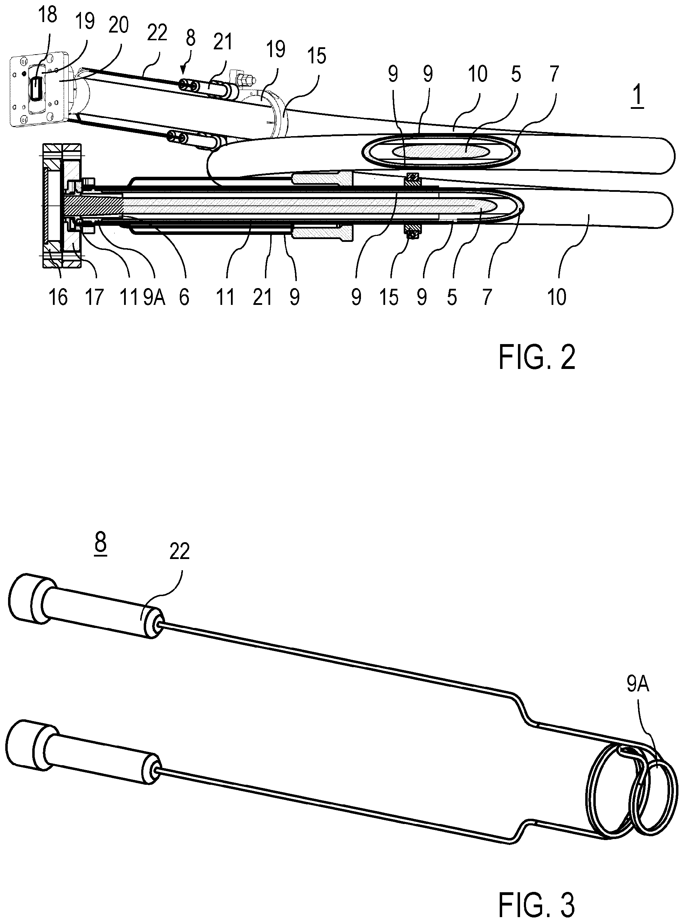

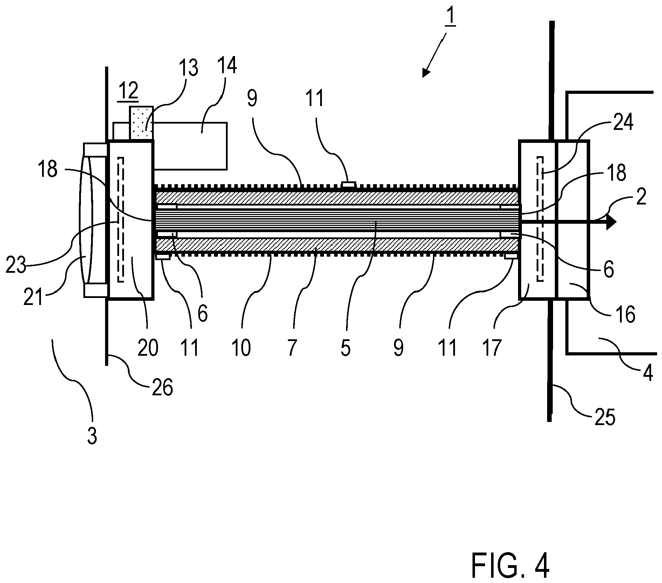

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Figur 1 zeigt eine schematische Perspektivansicht einer Ausführungsform der erfindungsgemäßen Bildleitervorrichtung 1. Figur 2 zeigt eine teilweise geschnittene Perspektivansicht einer Ausführungsform der Bildleitervorrichtung 1, die im Wesentlichen der Ausführungsform der Figur 1 entspricht. Figur 3 zeigt ein Detail eines Heizleiters. Figur 4 zeigt eine schematische Schnittansicht der Bildleitervorrichtung 1 am Einsatzort.

Die Bildleitervorrichtung 1 umfasst einen Leitermantel 7, in dessen Inneren sich ein Glasfaserbündel 5 befindet. Der Leitermantel 7 und das Glasfaserbündel 5 sind an ihren beiden Enden jeweils mit einem Anschlussstück 6 ausgestattet (siehe Figuren 2, 4). Jedes Anschlussstück 6, das zum Beispiel aus Edelstahl hergestellt ist, koppelt die Enden des Glasfaserbündels 5 mit den Enden des Leitermantels 7. Die einzelnen Fasern des Glasfaserbündels 5 werden derart sortiert in den Anschlussstücken 6 fest eingefasst, so dass Eingangs-/Ausgangsfenster 18 gebildet werden und bei der Bildübertragung 2 (schematisch gezeigt in Figur 4) das Bild, das in einem Reaktionsraum 3 aufgenommen wird, auf die Seite der Bildaufnahmeeinrichtung 4, wie z. B. einer Kamera, übertragen wird. Dazu werden die einzelnen Fasern des Glasfaserbündels 5 üblicherweise mit einer Klebeverbindung in eine rasterartige Haltestruktur des jeweiligen Anschlussstücks 6 eingefügt. Das Raster der Haltestruktur kann den Pixeln der Bildaufnahmeeinrichtung 4 entsprechen.

Der Außendurchmesser des Glasfaserbündels 5 ist vorzugsweise geringer als der Innendurchmesser des Leitermantels 7, sodass das Glasfaserbündel 5 im Inneren des Leitermantels 7 mit einem Spielraum in radialer Richtung angeordnet ist. Vorteilhafterweise werden dadurch mechanische Schäden am Glasfaserbündel 5 minimiert. Obwohl in der Praxis das Glasfaserbündel 5 typischerweise unter der Wirkung der Schwerkraft auf einer Innenwand im Leitermantel 7 aufliegt, wird mit der Heizleitereinrichtung eine gleichmäßige Erwärmung des Glasfaserbündels 5 erzielt. Alternativ kann der Außendurchmesser des Glasfaserbündels 5 an den Innendurchmesser des Leitermantels 7 angepasst sein, so dass der Leitermantel 7 das Glasfaserbündel 5 allseitig berührt. Diese Variante der Erfindung kann einen Vorteil durch eine Verbesserung des Wärmetransports von der Heizleitereinrichtung zum Glasfaserbündel 5 haben.

Das Glasfaserbündel 5 umfasst z. B. einen Faserstrang mit 1 190 000 Fasern, wobei die Fasern einen Durchmesser von 10 µm aufweisen und aus Quarzglas bestehen. Die Gesamtlänge des Glasfaserbündels 5 beträgt z. B. 2 m, und das Glasfaserbündel 5 hat an seinen Enden eine Querschnittsdimension, z. B. einen Durchmesser oder Seitenlänge des Eingangs-/Ausgangsfensters 18 des Glasfaserbündels 5, von z. B. 7 mm ^{∗} 17 mm. Die einzelnen Fasern sind mittels eines Klebstoffs mit den Anschlussstücken 6 verbunden. Der Leitermantel 7 ist ein flexibler Schlauch, z. B. ein Spiralschlauch aus Edelstahl mit einer Wandstärke des Schlauchmaterials von einigen zehntel Millimetern, einem Außendurchmesser von 29 mm und einem Innendurchmesser von 25 mm.

Der Leitermantel 7 ist mit einem Hüllschlauch 10 überzogen (in Figur 4 gepunktet gezeigt). Der Hüllschlauch 10 besteht vorzugsweise aus einem elastischen Material, das die Wärmeleitfähigkeit eines Metalls aufweist, wie einem Drahtgeflecht (im Detail nicht gezeigt), z. B. Kupfergeflecht (Hersteller z. B. Techflex Germany GmbH). Der Hüllschlauch 10 verbessert vorteilhafterweise die Gleichmäßigkeit der Wärmeverteilung im Inneren des Leitermantels 7, wodurch eine effiziente Regeneration des Glasfaserbündels 5 verbessert wird.

Die erfindungsgemäß vorgesehene Heizleitereinrichtung 8 weist zwei Heizleiter 9 (Mantel-Heizleiter) auf, die auf der Außenseite des Leitermantels 7 zwischen dem Hüllschlauch 10 und dem Leitermantel 7 angeordnet sind (siehe Figuren 2, 4). Die Heizleiter 9 befinden sich auf zueinander gegenüberliegenden Seiten des Leitermantels 7, z. B. in Figur 2 auf einer Oberseite und einer Unterseite, und sie sind über Heizleiteranschlüsse 22 mit zugehörigen Stromversorgungen (nicht dargestellt) koppelbar. Die beiden Heizleiter 9 erstrecken sich jeweils über die gesamte Länge des Leitermantels 7. Des Weiteren sind auf der Außenseite des Leitermantels 7 mehrere Temperatursensoren 11 angeordnet (siehe Figuren 2, 4).

Alternativ zur gezeigten Ausführungsform kann mindestens ein Heizleiter 9, der sich entlang der Länge des Leitermantels 7 erstreckt, im Inneren des Leitermantels 7 zwischen dem Glasfaserbündel 5 und dem Leitermantel 7 angeordnet sein. In diesem Fall kann die Wärme des Heizleiters 9 direkt im Inneren des Leitermantels 9 abgegeben werden, wodurch das Material des Leitermantels 7 einen geringeren Einfluss auf die Wärmeverteilung hat.

Zusätzlich zu den beiden Heizleitern 9, die sich entlang des Leitermantels 7 erstrecken, umfasst die Heizleitereinrichtung 8 an den Anschlussstücken 6 jeweils einen weiteren Heizleiter 9A (Anschluss-Heizleiter, siehe Figuren 2, 3). Die weiteren Heizleiter 9A umgeben die beiden Anschlussstücke 6 jeweils mindestens teilweise. Die weiteren Heizleiter 9A sind über Heizleiteranschlüsse 22 mit zugehörigen Stromversorgungen (nicht dargestellt) koppelbar. Durch die weiteren Heizleiter 9A, die vorzugsweise an die Kontur der Anschlussstücke 6 angepasst sind, kann vorteilhafterweise ein unerwünschter Temperaturgradient im Bereich der Anschlussstücke 6 vermieden werden und die Regenerationsfähigkeit und mechanische Beständigkeit der Glasfasern verbessert werden.

Die Heizleiter 9, 9A sind als Widerstandsheizelemente gebildet (Hersteller z. B. ThermoExpert Deutschland GmbH) und können jeweils mit einer Stromversorgung, z. B. einem Stromversorgungs-Netzteil, verbunden werden (nicht dargestellt). Entsprechend weist die dargestellte Ausführungsform mit vier Heizleitern 9 acht Heizleiteranschlüsse 22 auf. Alternativ können die Heizleiter 9, 9A teilweise zu Gruppen zusammengefasst werden. Beispielsweise könnten die beiden Heizleiter 9, die sich entlang des Leitermantels 7 erstrecken, zu einer Gruppe zusammengefasst werden und gemeinsam mit einer einzigen Stromversorgung betrieben werden. Die beiden Heizleiter 9A an den Anschlussstücken 6 (siehe z. B. Figuren 2 und 4) können jeweils mit einer oder zwei separaten Stromversorgung(en) betrieben werden. Alternativ kann für alle Heizleiter 9, 9A eine gemeinsame Stromversorgung mit mehreren Ausgängen vorgesehen sein, die jeweils separat steuerbar sind.

Die Heizleiter 9, 9A weisen jeweils eine elektrische Isolation, vorzugsweise aus einem mineralischen Isolationsmaterial, wie z. B. MgO, auf. Auf der Oberfläche des Leitermantels 7 werden die Heizleiter 9, 9A durch den Hüllschlauch 10 in Position gehalten. Um einen engen thermischen Kontakt mit dem Leitermantel 7 zu bilden, können die Heizleiter 9, 9A zusätzlich mit Befestigungselementen, z. B. Silberdraht, an dem Leitermantel 7 oder den Anschlussstücken 6 fixiert sein.

An den Enden des Leitermantels 7 weist die Bildleitervorrichtung 1 vorzugsweise Kopplungsbauteile auf, mit denen die Anschlussstücke 6 verbunden sind (siehe Figuren 1, 2 und 4). Das Ende des Leitermantels 7 auf der einer Kamera der Bildaufnahmeeinrichtung 4 zugewandten Seite weist mehrere Kopplungsbauteile auf, die einen Verbindungsflansch 17, z. B. einen CF-Flansch, und einen Fensterflansch 16 der Kamera umfassen und miteinander lösbar verbunden, z. B. verschraubt sind. Am anderen Ende ist ein Kopplungsbauteil am Anschlussstück 6 ein Optikflansch 20, der zur Verbindung mit einer Optik 21 (siehe Figur 4) im Reaktionsraum 3 eingerichtet ist.

Um ein Abfließen von Wärme von der Bildleitervorrichtung 1 auf den Reaktionsraum 3 oder die Bildaufnahmeeinrichtung 4 zu vermeiden, kann mindestens eines der Kopplungsbauteile ein Isolationselement 19 aus wärmeisolierendem Material, z. B. eine Kunststoff-Platte mit einer durchgehenden Öffnung, am jeweiligen Ende des zugehörigen Anschlussstücks 6 aufweisen. Vorzugsweise ist das Material des mindestens einen Isolationselements 19 auch elektrisch isolierend, sodass ein etwaiger unkontrollierter Stromfluss in der Umgebung der Bildleitervorrichtung 1 nicht die Anschlussstücke 6 erreicht. Des Weiteren wird verhindert, dass bei einer Fehlfunktion einer Komponente der Bildleitervorrichtung 1, z. B. bei einem Kurzschluss aufgrund eines Isolationsfehlers in den Heizleitern 9, weitere Umgebungskomponenten 14 beschädigt werden, oder dass ein Ausheizen des Reaktionsraums 3, beispielsweise einer Vakuumkammer, bei hohen Temperaturen, eine Beschädigung der Glasfasern zur Folge haben könnte.

Figur 4 zeigt eine schematische Schnittansicht der Bildleitervorrichtung 1 am Einsatzort. Aus Gründen der Übersichtlichkeit ist Figur 4 keine maßstäbliche Darstellung. Auf der linken Seite befindet sich der Reaktionsraum 3, aus dem Bilder aufgenommen und zu der Bildaufnahmeeinrichtung 4 auf der rechten Seite übertragen werden sollen. Der Reaktionsraum 3 ist zum Beispiel die Brennkammer eines Fusionsreaktors. Der Reaktionsraum 3 und vorzugsweise die gesamte Bildleitervorrichtung 1 befinden sich in einem Bereich, in dem ein Ultrahochvakuum gebildet ist. Der Ultrahochvakuum-Bereich ist z. B. durch eine schematisch, teilweise gezeigte Reaktorwandeinrichtung 25 von der Umgebung unter einem höheren Druck, z. B. Atmosphärendruck, abgegrenzt. Die Bildleitervorrichtung 1 kann verwendet werden, um Bilder eines Fusionsplasmas in der Brennkammer des Fusionsreaktors aufzunehmen und an die Bildaufnahmeeinrichtung 4 weiterzuleiten, die in der Umgebung mit dem höheren Druck angeordnet ist. Andere Anwendungsmöglichkeiten sind z. B. die Überwachung von Strahleigenschaften eines Teilchenbeschleunigers oder die Aufnahme von Bildern aus Umgebungen mit ungefilterter kosmischer Strahlung (Raumteleskope, Raumstationen, Mondfahrzeuge, o. dgl.).

Das Glasfaserbündel 5 ist über das Anschlussstück 6 und den Verbindungsflansch 17 mit einem Fensterflansch 16 der Bildaufnahmeeinrichtung 4 verbunden. Der Verbindungsflansch 17 ist zur druckdichten Verbindung mit der Reaktorwandeinrichtung 25 vorgesehen. Der Fensterflansch 16 und die Bildaufnahmeeinrichtung 4 befinden sich in der Atmosphärendruck-Umgebung. Auf der linken Seite ist das Glasfaserbündel 5 über das weitere Anschlussstück 6 mit dem Optikflansch 20 verbunden, der wiederum mit der Optik 21 im Reaktionsraum 3 verbunden ist. Der Optikflansch 20 ist mit einer schematisch gezeigten Halterung 26 im Ultrahochvakuum-Bereich positioniert. Die Eingangs-/Ausgangsfenster 18 des Glasfaserbündels 5 liegen zum Reaktionsraum 3 und zur Bildaufnahmeeinrichtung 4 hin frei, so dass einerseits mit der Optik 21 ein Bild über das Eingangs-/Ausgangsfenster 18 auf Seiten des Reaktionsraums 3 in das Glasfaserbündel 5 eingekoppelt und andererseits über das Eingangs-/Ausgangsfenster 18 auf Seiten der Bildaufnahmeeinrichtung 4 ausgekoppelt und von der Bildaufnahmeeinrichtung 4 aufgenommen werden kann. Auf diese Weise erfolgt die Bildübertragung 2 vom Reaktionsraum 3 zu der sich entfernt befindlichen Bildaufnahmeeinrichtung 4. Das Glasfaserbündel 5 ist auf beiden Seiten jeweils mittels einer Klebeverbindung in die beiden Anschlussstücke 6 eingefügt.

Figur 4 illustriert schematisch optional vorgesehene transparente Platten 23, 24 (gestrichelt dargestellt), von denen mindestens eine zwischen dem zum Reaktionsraum 3 weisenden Eingangs-/Ausgangsfenster 18 und der Optik 21 und/oder zwischen dem zu der Bildaufnahmeeinrichtung 4 weisenden Eingangs-/Ausgangsfenster 18 und der Bildaufnahmeeinrichtung 4 angeordnet ist. Vorzugsweise sind die Platte 23 in den Optikflansch 20 und/oder die Platte 24 in den Fensterflansch 16 und/oder den Verbindungsflansch 17 integriert. Die transparenten Platten 23, 24 sind ebene Platten aus Quarzglas. Mit den Platten 23, 24 werden bei der Erwärmung des Glasfaserbündels 5 die Optik 21 bzw. die Bildaufnahmeeinrichtung 4 vor Beschlag geschützt. Die Platten 23, 24 sind optional jeweils mit einem Antrieb (nicht dargestellt) beweglich, um sie nach Art eines Shutters in den oder aus dem Strahlengang der Optik 21 und/oder der Bildaufnahmeeinrichtung 4 zu bewegen. Die Antriebe können ebenfalls in den Optikflansch 20 und/oder den Fenster- und/oder Verbindungsflansch 16, 17 integriert sein.

Da der Leitermantel 7 mit dem Glasfaserbündel 5 deformierbar ist, können zur Fixierung der Bildleitervorrichtung 1 zusätzlich zu den Kopplungsbauteilen Halteklammern 15, z. B. aus Edelstahl, im Bereich des Leitermantels 7 an der Bildleitervorrichtung 1 vorgesehen sein (siehe Figuren 1, 2). Die Halteklammern 15 sind von dem Leitermantel 7 jeweils durch einen Isolationsring 19 getrennt. Die Halteklammern 15 können in der Umgebung der Bildleitervorrichtung 1 befestigt werden. Auf diese Weise kann verhindert werden, dass der Leitermantel 7 mit Umgebungskomponenten 14 in Kontakt kommt (schematisch in Figur 4 gezeigt), die nicht für eine hohe Wärmebelastung ausgelegt sind.

Des Weiteren stützen die Halteklammern 15 den Leitermantel 7 und die daran befestigten Heizleiter 9 sowie das Glasfaserbündel 5. Vorteilhafterweise wird damit eine unerwünschte Deformation, wie z. B. ein Durchhängen, der Bildleitervorrichtung 1 und deren unbeabsichtigte Beschädigung vermieden. In den Figuren 1 und 2 sind zwei Halteklammern 15 in der Nähe der Anschlussstücke 6 dargestellt. In der Praxis können mehr Halteklammern 15 und/oder Halteklammern 15 an anderen Positionen verwendet werden. Des Weiteren können die Halteklammern 15 eine andere geometrische Form, wie z. B. die Gestalt eines elastischen Greifers, aufweisen.

Optional kann die Bildleitervorrichtung 1 eine Zusatz-Heizeinrichtung 12 aufweisen, die ein Arbeitsgas 13 auf einen Temperaturbereich von 100 °C bis 400 °C erhitzen kann (siehe Figur 4). Dieses erhitzte Arbeitsgas 13 kann verwendet werden, um Umgebungskomponenten 14, die mit der Bildleitervorrichtung 1 interagieren, und/oder Bauteile der Bildleitervorrichtung 1 auf eine vorgesehene Temperatur zu erhitzen. Beispielsweise könnte der Klebestoff einer Klebeverbindung zwischen dem Glasfaserbündel 5 und den Anschlussstücken 6 ausgasen. Diese Gase können sich auf den Umgebungskomponenten 14, beispielsweise auf dem Optikflansch 20 im Reaktionsraum 3 niederschlagen. Der Optikflansch 20 könnte verschmutzen und müsste ggf. ausgetauscht werden. Je nach Art des Reaktionsraums 3, etwa einem Teilchenbeschleuniger, kann das einen erheblichen Arbeitsaufwand bedeuten. Eine Erwärmung der Umgebungskomponenten auf eine Temperatur, die im Wesentlichen der Temperatur des Leitermantels 7 entspricht, kann eine Kondensation dieser Gase an der Umgebungskomponente 14 verhindern. Das Arbeitsgas, z. B. Stickstoff oder Argon, kann die unerwünschten Gase aufnehmen. Die Zusatz-Heizeinrichtung 12 kann wie dargestellt im Ultrahochvakuum-Bereich betrieben werden, wobei optional eine vorzugsweise lokal wirkende Förderpumpe (nicht dargestellt) für einen Abtransport des Arbeitsgases mit dem ausgetretenen Gas vorgesehen ist. Auch bei Anwendungen der Erfindung mit einem Betrieb der Bildleitervorrichtung 1 unter Atmosphärendruck können die Zusatz-Heizeinrichtung 12 und optional die Förderpumpe vorgesehen sein.

Die Herstellung der Bildleitervorrichtung 1 erfolgt, indem zunächst das Glasfaserbündel 5, der Leitermantel 7 und die Anschlussstücke 6 als getrennte Bauteile bereitgestellt werden und das Glasfaserbündel 5 im Inneren des Leitermantels 5 positioniert wird. Das Glasfaserbündel 5 und der Leitermantel 5 werden durch Fixierung der Anschlussstücke 6 miteinander verbunden. Der mindestens eine Heizleiter 9 wird entlang der Länge des Leitermantels 7 mit Befestigungselementen fixiert. Anschließend wird der Hüllschlauch 10 über den Leitermantel 7 mit dem mindestens einen Heizleiter 9 gezogen.

Um den Leitermantel 7 mit dem Hüllschlauch 10 zu überziehen, kann ein Hilfsrohr (nicht dargestellt) verwendet werden, das einen größeren Durchmesser als der Verbund aus Leitermantel 7, Anschlussstücken 6 (eventuell mit Fassung), Heizleitereinrichtung 8 und Glasfaserbündel 5 aufweist. Der Hüllschlauch 10 wird dazu zuerst über das Hilfsrohr gezogen. Da der Hüllschlauch 10 aus einem elastischen Material gefertigt ist und das Hilfsrohr weniger Unebenheiten aufweist als der Leitermantel 7 mit den damit verbundenen Komponenten, kann der Hüllschlauch 10 unkompliziert über das Hilfsrohr aufgezogen werden. Anschließend wird der Leitermantel 7 mit den weiteren Komponenten durch das Hilfsrohr hindurchgesteckt. Das eine Ende des Hüllschlauchs 10 wird ungefähr in die Position gebracht, an der es sich auch auf der vollständig montierten Bildleitervorrichtung 1 befinden soll. Im nächsten Schritt werden dieses Ende des Hüllschlauchs 10 und der Leitermantel 7 mit den weiteren Komponenten festgehalten und das Hilfsrohr abgezogen, wobei der Hüllschlauch 10 auf dem Leitermantel 7 verbleibt.

Anschließend werden die Anschluss-Heizleiter 9A an den Anschlussstücken 6 angebracht. Die Vorbereitung der Anschluss-Heizleiter 9A ist in Figur 3 gezeigt. Zur Anpassung der Form des Anschluss-Heizleiters 9A am die Gestalt des Anschlussstücks 6 wird der Heizleiter 9A über einen geeignet geformten Dorn gebogen. Die so entstandenen Windungen passen zur der Außenkontur des zugehörigen Anschlussstücks 6. Bei der Gestalt des Dorns wird die Elastizität des Heizleiters 9A derart beachtet, dass der Heizleiter 9A in die vorgesehene Form federt, wenn er von dem Dorn abgenommen wird.

Die Bildleitervorrichtung 1, die vorzugsweise für den Einsatz in strahlungsbelasteten Umgebungen vorgesehen ist, wird wie folgt betrieben. Durch die Wechselwirkung mit ionisierender Strahlung kommt es zu Defekten in der Gitterstruktur der Fasern des Glasfaserbündels 5, die eine Trübung und/oder Verfärbung der ohne Bestrahlung transparenten Fasern zur Folge hat. Durch Erhitzung der Fasern auf wenige 100 °C können viele dieser Defekte ausgeheilt werden. Die Bildleitervorrichtung 1 ermöglicht es, dass die Regeneration des Glasfaserbündels 5 direkt am Einsatzort vorgenommen werden kann, ohne dass die Bildleitervorrichtung 1 in einen speziellen Ofen umgebaut werden muss.

Hierzu wird die Heizleitereinrichtung 8 bei Bedarf, d. h. bei Einschränkung der Transmission und/oder in vorbestimmten Wartungsintervallen, an Stromversorgungen angeschlossen, um auf eine Temperatur im Bereich von 100 °C und 300 °C, insbesondere von 200 °C und 250 °C, erwärmt zu werden. Die Regenerationstemperatur wird in Abhängigkeit von der Glassorte des Glasfaserbündels 5, von der Art der ionisierenden Strahlung die die Materialdefekte erzeugt hat, dem möglichen Ausgasungsverhalten eines eventuell in der Bildleitervorrichtung 1 enthaltenen Klebstoffs und der Temperatur gewählt, bei der die Bestrahlung stattgefunden hat. Während der Bildübertragung 2 zwischen dem Reaktionsraum 3 und der Bildaufnahmeeinrichtung 4 wird die Bildleitervorrichtung 1 bei einer Temperatur unter 100 °C, typischerweise bei Raumtemperatur, betrieben.

Durch die Beaufschlagung mit elektrischem Strom erwärmen sich die Heizleiter 9, 9A auf die gewünschte Temperatur. Dazu wird vorzugsweise mit den Temperatursensoren 11 die Temperatur des Leitermantels 7 und/oder von mindestens einem der Anschlussstücke 6 gemessen. Die Temperatursensoren 11 sind Teil eines Regelkreises, z. B. einer Proportional-Integral-Differential-Schleife, der mit den Stromversorgungen verbunden ist. Die Temperaturdaten der Temperatursensoren 11 werden im Regelkreis als Istwerte der Regelgröße zur Regelung der Stromversorgung verwendet. Die Erwärmung endet nach Erreichen einer ausreichenden Transmission durch die Bildleitervorrichtung 1 und/oder nach einem vorgegebenen Zeitintervall. Anschließend kann die Bildleitervorrichtung 1 von den Stromversorgungen getrennt und für die Bildübertragung weiter verwendet werden.

Praktische Tests der Bildleitervorrichtung 1 durch die Erfinder haben ergeben, dass eine strahlungsinduzierte Verminderung und spektrale Verschiebung der Transmission des Glasfaserbündels 5 in quantitativ ähnlicher Weise rückgängig gemacht werden konnte, wie durch das herkömmliche Ausheizen im Vakuumofen.

Die in der vorstehenden Beschreibung, den Zeichnungen und den Ansprüchen offenbarten Merkmale der Erfindung können sowohl einzeln als auch in Kombination oder Unterkombination für die Verwirklichung der Erfindung in ihren verschiedenen Ausgestaltungen von Bedeutung sein.

### Bezugszeichenliste

1 Bildleitervorrichtung
2 Bildübertragung
3 Reaktionsraum
4 Bildaufnahmeeinrichtung
5 Glasfaserbündel
6 Anschlussstück
7 Leitermantel
8 Heizleitereinrichtung
9 Heizleiter
10 Hüllschlauch
11 Temperatursensor
12 Zusatz-Heizeinrichtung
13 Arbeitsgas
14 Umgebungskomponente
15 Halteklammer
16 Fensterflansch
17 Verbindungsflansch
18 Eingangs-/Ausgangsfenster
19 Isolationsring
20 Optikflansch
21 Optik
22 Heizleiteranschluss
23 Platte
24 Platte
25 Wandeinrichtung
26 Halterung

## Patentansprüche

1. Bildleitervorrichtung (1), die zur Bildübertragung (2) aus einem Reaktionsraum (3) an eine Bildaufnahmeeinrichtung (4) eingerichtet ist, umfassend
- ein Glasfaserbündel (5), das für die Bildübertragung (2) eingerichtet und mit zwei Anschlussstücken (6) verbunden ist, die jeweils an einem Ende des Glasfaserbündels (5) angeordnet sind, und
- einen Leitermantel (7), der das Glasfaserbündel (5) umhüllt und sich zwischen den Anschlussstücken (6) erstreckt,
**gekennzeichnet durch**
- eine Heizleitereinrichtung (8) mit mindestens einem Heizleiter (9), der zur Erwärmung des Glasfaserbündels (5) entlang seiner Länge auf eine vorbestimmte Behandlungstemperatur derart vorgesehen ist, dass durch die Erwärmung auf die Behandlungstemperatur strahlungsinduzierte Materialdefekte im Glasfaserbündel (5) reduzierbar sind.

2. Bildleitervorrichtung (1) gemäß Anspruch 1, wobei
- der mindestens eine Heizleiter (9) entlang der Außenseite des Leitermantels (7) verläuft und sich in thermischem Kontakt mit dem Leitermantel (7) befindet.

3. Bildleitervorrichtung (1) gemäß Anspruch 1, wobei
- der mindestens eine Heizleiter (9) zusammen mit dem Glasfaserbündel (5) im Inneren des Leitermantels (7) angeordnet ist und sich über die Länge des Leitermantels (7) erstreckt.

4. Bildleitervorrichtung (1) gemäß einem der vorherigen Ansprüche, wobei
- die Heizleitereinrichtung (8) zwei Heizleiter (9) umfasst, die sich entlang der Länge des Leitermantels (7) erstrecken und an einander gegenüberliegenden Seiten des Glasfaserbündels (5) angeordnet sind.

5. Bildleitervorrichtung (1) gemäß einem der vorherigen Ansprüche, wobei
- die Heizleitereinrichtung (8) an mindestens einem der Anschlusstücke (6) einen zusätzlichen Heizleiter (9) aufweist, der zumindest teilweise das Anschlussstück (6) umgibt und in thermischem Kontakt mit dem Anschlussstück (6) steht.

6. Bildleitervorrichtung (1) gemäß einem der vorherigen Ansprüche, ferner umfassend
- mindestens einen Hüllschlauch (10), der den Leitermantel (7) und den mindestens einen Heizleiter (9) seitlich gleichmäßig bedeckt und für eine Verteilung von Wärme von dem mindestens einen Heizleiter (9) auf den Leitermantel (7) eingerichtet ist, wobei der mindestens eine Hüllschlauch (10) eine thermische Leitfähigkeit eines metallischen Werkstoffs aufweist und deformierbar ist.

7. Bildleitervorrichtung (1) gemäß Anspruch 6, wobei
- der mindestens eine Hüllschlauch (10) ein Metallgeflecht umfasst.

8. Bildleitervorrichtung (1) gemäß einem der vorherigen Ansprüche, ferner umfassend
- mindestens einen Temperatursensor (11), der zur Erfassung der Temperatur der Bildleitervorrichtung (1) eingerichtet ist, und/oder
- eine Zusatz-Heizeinrichtung (12) mit einem temperierbaren Arbeitsgas (13), das zur Beheizung mindestens einer Umgebungskomponente (14) der Bildleitervorrichtung (1) ausgebildet ist.

9. Bildleitervorrichtung (1) gemäß einem der vorherigen Ansprüche, wobei
- die Heizleitereinrichtung (8) zur Erwärmung des Glasfaserbündels (5) auf die Behandlungstemperatur im Bereich von 100 °C und 300 °C, insbesondere von 200 °C und 250 °C, eingerichtet ist, und/oder
- der Leitermantel (7) eine thermische Leitfähigkeit eines metallischen Werkstoffs aufweist.

10. Bildleitervorrichtung (1) gemäß einem der vorherigen Ansprüche, ferner umfassend
- mindestens eine transparente Platte (23), die an ein Eingangs-/Ausgangsfenster (18) des Glasfaserbündels (5) und/oder eine Optik (21) auf Seiten des Reaktionsraums (3) angrenzend so angeordnet ist, dass das Eingangs-/Ausgangsfenster (18) und/oder die Optik (21) bei der Erwärmung des Glasfaserbündels (5) vor Beschlag geschützt wird, und/oder
- mindestens eine transparente Platte (24), die an ein Eingangs-/Ausgangsfenster (18) des Glasfaserbündels (5) auf Seiten der Bildaufnahmeeinrichtung (4) angrenzend so angeordnet ist, dass das Eingangs-/Ausgangsfenster (18) und/oder die Bildaufnahmeeinrichtung (4) bei der Erwärmung des Glasfaserbündels (5) vor Beschlag geschützt wird.

11. Verfahren zur Herstellung einer Bildleitervorrichtung (1) gemäß einem der vorherigen Ansprüche, mit den Schritten:
- Bereitstellung des Glasfaserbündels (5) und des Leitermantels (7) zur Aufnahme des Glasfaserbündels (5);
- Positionierung des Glasfaserbündels (5) im Inneren des Leitermantels (5);
- Bereitstellung der zwei Anschlussstücke (6) zur Verbindung mit dem Glasfaserbündel (5);
- Positionierung des mindestens einen Heizleiters (9) entlang der Länge des Leitermantels (7); und
- Verbindung der Anschlussstücke (6) jeweils mit einem der beiden Enden des Glasfaserbündels (5) und dem zugehörigen Ende des Leitermantels (7).

12. Verfahren gemäß Anspruch 11, des Weiteren umfassend die Schritte
- Positionierung von mindestens einem zusätzlichen Heizleiter (9), der zumindest teilweise mindestens eines der Anschlusstücke (6) umgibt und im thermischen Kontakt mit dem Anschlussstück (6) steht.

13. Verfahren gemäß einem der Ansprüche 11 oder 12, des Weiteren umfassend die Schritte
- Bereitstellung mindestens eines Hüllschlauchs (10), der eine thermische Leitfähigkeit eines metallischen Werkstoffs aufweist und elastisch ist; und
- Überziehen des Leitermantels (7), des Glasfaserbündels (5) und des mindestens einen Heizleiters (9), der zur Erwärmung des Glasfaserbündels (5) vorgesehen ist, mit dem mindestens einen Hüllschlauch (10), so dass der mindestens eine Hüllschlauch (10) für eine Verteilung von Wärme von dem mindestens einen Heizleiter (9) auf den Leitermantel (7) und den mindestens einen Heizleiter seitlich gleichmäßig bedeckt.

14. Verfahren gemäß einem der Ansprüche 11 bis 13, des Weiteren umfassend die Schritte
- Anbringung von mindestens einem Temperatursensor (11), der zur Erfassung der Temperatur der Bildleitervorrichtung (1) eingerichtet ist.

15. Verfahren gemäß einem der Ansprüche 11 oder 14, bei dem das Überziehen des Leitermantels (7), des Glasfaserbündels (5) und des mindestens einen Heizleiters (9) mit dem Hüllschlauch (10) umfasst
- Aufspannen des Hüllschlauchs (10) auf einem Hilfsrohr mit einem Innendurchmesser, der größer ist als der Außendurchmesser des Verbundes aus dem Leitermantel (7), dem Glasfaserbündel (5) und dem mindestens einen Heizleiter (9);
- Positionierung des Leitermantels (7) mit dem Glasfaserbündel (5) und dem mindestens einen Heizleiter (9) in dem Hilfsrohr; und
- Rückziehen des Hilfsrohrs von dem Leitermantel (7) mit dem Glasfaserbündel (5) und dem mindestens einen Heizleiter (9), während der Hüllschlauch (10) auf dem Leitermantel (7), dem Glasfaserbündel (5) und dem mindestens einen Heizleiter (9) verbleibt.

16. Verfahren gemäß einem der Ansprüche 11 bis 15, des Weiteren umfassend die Schritte
- Befestigen von mindestens einer Halteklammer (15) an der Bildleitervorrichtung (1), wobei die mindestens eine Halteklammer (15) an ihren Kontaktstellen mit der Bildleitervorrichtung (1) aus einem elektrisch und thermisch isolierenden Material gefertigt ist; und
- Befestigung der mindestens einen Halteklammer (15) an mindestens einer Umgebungskomponente (14) der Heizleitervorrichtung.

17. Verfahren zur Regeneration der Bildleitervorrichtung (1) gemäß einem der Ansprüche 1 bis 10, umfassend den Schritt:
- Erwärmung des Glasfaserbündels (5) mit der Heizleitereinrichtung (8) auf die Behandlungstemperatur derart, dass durch die Erwärmung auf die Behandlungstemperatur strahlungsinduzierte Materialdefekte im Glasfaserbündel (5) reduziert werden, vorzugsweise auf die Behandlungstemperatur im Bereich von 100 °C und 300 °C, insbesondere von 200 °C und 250 °C, erwärmt wird.

18. Verfahren gemäß Anspruch 17, des Weiteren umfassend die Schritte
- Erwärmung eines Arbeitsgases (13) mit der Zusatz-Heizeinrichtung (12) auf eine Temperatur im Bereich von 100°C und 400°C, insbesondere von 200°C und 300°C; und
- Anströmen der mindestens einen Umgebungskomponente (14) der Bildleitervorrichtung (1) mit dem erwärmten Arbeitsgas (13).
